# FASCICULE DE BREVET EUROPEEN

(11) **EP 0 913 369 B1**
(45) Date de publication et mention de la délivrance du brevet: **12.01.2005**
(21) Numéro de dépôt: 98402698.9
(22) Date de dépôt: 29.10.1998
(51) Int. Cl.: C03C 27/04, H05B 3/74, F24C 15/10

(54) **Plaque en matériau verrier**
Glasscheibe
Glass plate

(30) Priorité: 29.10.1997 FR 9713552
(43) Date de publication de la demande: 06.05.1999
(73) Titulaire: Eurokera S.N.C., 02405 Chateau-Thierry Cedex (FR)
(72) Inventeur: Vilato, Pablo, 75014 Paris (FR); Grassi, Michel, 77260 la Ferté sous Jouarre (FR); Mikoda, Jean-François, 60840 Nointel (FR)
(74) Mandataire: Muller, René

(56) Documents cités:
- EP-A- 0 081 426
- EP-A- 0 421 833
- EP-A- 0 620 134
- EP-A- 0 639 538
- FR-A- 2 744 201

## Description

L'invention concerne des plaques en matériau verrier, plus particulièrement destinés à équiper des tables de cuisson, telles que des plaques en verre trempé ou des plaques vitrocéramiques. De telles plaques en verre trempé sont notamment utilisées pour former le dessus de tables de cuisson à gaz, les brûleurs pouvant traverser lesdites plaques en verre trempé. Les plaques vitrocéramiques sont plus particulièrement destinées à couvrir des éléments chauffants.

Bien que non limitée à de telles applications, l'invention sera plus particulièrement décrite en référence à des plaques vitrocéramiques constituant la partie supérieure de tables de cuisson. De telles tables de cuisson comportent notamment des éléments chauffants tels que des foyers radiants ou foyers halogènes, et des moyens de régulation permettant de faire varier leurs puissances.

Ces différents éléments sont disposés dans une structure, habituellement métallique, et recouverts par une plaque vitrocéramique, qui ferme la structure. Le montage de ces plaques de cuisson se terminent donc par la mise en place de la plaque vitrocéramique sur la structure métallique. Cette étape de fabrication est réalisée par collage à l'aide d'une colle silicone, qui est adaptée pour une telle utilisation. En effet, la colle silicone remplit des fonctions de natures différentes. Tout d'abord, elle permet de maintenir la plaque vitrocéramique sur la structure selon une position définie ; une table de cuisson ainsi réalisée peut être facilement transportée, tous les éléments étants fixés les uns aux autres. Une autre fonction de la colle silicone est d'assurer l'étanchéité de l'enceinte formée par la structure métallique et la plaque vitrocéramique. Cette enceinte doit tout d'abord présenter une bonne étanchéité pour que l'eau, par exemple en cas de débordement, ne pénètre pas à l'intérieur et risque de créer un court-circuit. D'autre part, d'un point de vue hygiénique, une telle plaque étant un outil pour la préparation d'aliments, il faut éviter toute possibilité d'encrassement dans des zones difficiles d'accès et impossibles à nettoyer pour ne pas voir apparaître des centres de développement de germes.

Une autre fonction de la colle silicone est d'amortir les chocs mécaniques : d'une part elle évite un contact direct entre la structure métallique et la plaque vitrocéramique et d'autre part, elle peut compenser les dilatations thermiques de la structure métallique, la plaque vitrocéramique ayant un coefficient de dilatation thermique quasi nul. Une caractéristique des colles silicones est de présenter une bonne résistance à la température. Bien que la colle silicone ne soit utilisée qu'en périphérie de la plaque vitrocéramique et donc à distance des zones de chauffe, cette résistance à la température est importante ; en effet, tout d'abord la périphérie de la plaque vitrocéramique subit tout de même une élévation de température lorsque un ou plusieurs foyers chauffants sont mis en fonction. De plus, un élément chauffé, tel qu'une casserole peut être déposé sur le bord de la plaque et soumet donc rapidement la colle à une température élevée.

Une dernière fonction de la colle silicone pour certains montages est d'ordre esthétique ; au moins une partie de la colle étant déposée par le dessus, il est important de pouvoir lisser celle-ci de façon à lui donner un bon aspect car au moins une partie peut rester apparente, or une colle silicone est facilement façonnable.

Par contre, ce montage consistant à coller la plaque vitrocéramique sur la structure métallique à l'aide d'une colle silicone présente différents inconvénients. Tout d'abord, il nécessite une quantité relativement importante de colle silicone ; le coût élevé de ce produit est un premier inconvénient. En effet, il apparaît que lors du montage, d'une part la quantité nécessaire de silicone est importante pour combler la totalité de l'espace entre la plaque et le cadre et, d'autre part une partie de la silicone déposée est inutile ou retirée. La silicone peut être inutile lorsqu'elle déborde involontairement de la zone de collage et retirée, notamment lors du lissage. Un autre inconvénient est lié au temps de polymérisation qui augmente avec la quantité de matière et qui conduit également à augmenter les coûts de fabrication, notamment du fait de la nécessité de prévoir un stockage intermédiaire des plaques.

Par ailleurs, un autre inconvénient notamment lié à ce temps de polymérisation élevé, concerne le montage proprement dit. Les plaques vitrocéramiques sont habituellement livrées telles quelles aux fabricants de tables de cuisson qui se chargent de l'assemblage. A priori, un tel montage en usine, où les ouvriers disposent des outils nécessaires, ne présente pas de problèmes. Par contre, un tel montage paraît beaucoup plus délicat pour un artisan qui doit remonter une plaque vitrocéramique sur une structure métallique, après avoir effectué une réparation de nature électrique ou bien pour changer cette plaque vitrocéramique qui a pu subir des dommages. En effet, il paraît délicat pour l'artisan de fixer la plaque vitrocéramique car il doit à la fois disposer la colle silicone à la périphérie de ladite plaque, sur la face interne et sur les bords, lisser la colle en zone apparente, et maintenir la plaque vitrocéramique bien centrée tout en la pressant, durant toutes ces opérations et pendant le temps de polymérisation de la colle, qui est relativement important.

D'autre part, la dépose d'une telle plaque vitrocéramique, préalablement fixée sur une structure métallique à l'aide d'une colle silicone, n'est également pas facile, notamment pour un artisan. Celui-ci doit effectuer une découpe dans la colle silicone par le dessous, c'est-à-dire côté face interne de la plaque vitrocéramique, et une découpe par le dessus, c'est-à-dire sur le bord de ladite plaque. Ces deux opérations, qui doivent être effectuées sur toute la périphérie ne sont pas simples car les deux lignes de découpe doivent se rejoindre pour bien désolidariser les deux éléments : plaque vitrocéramique et structure métallique. De plus, et plus particulièrement lors de la découpe côté face interne de la plaque vitrocéramique, il n'est pas aisé d'effectuer cette découpe sans rayer la face interne de la plaque. En effet, une rayure peut conduire à une fissure lors de contraintes et donc à une casse de la plaque. Un démontage d'une plaque vitrocéramique en vue de remonter celle-ci ultérieurement, apparaît donc quasiment impossible à réaliser sans détériorer la plaque. De plus, pour la refixer sur la structure, il est nécessaire d'éliminer au maximum les traces de colle silicone du précédent montage, ce qui risque également d'entraîner des rayures, notamment sur la face inférieure de la plaque vitrocéramique, fragilisant cette dernière.

En conséquence, aujourd'hui il est habituel pour changer une plaque vitrocéramique ou pour son démontage, de travailler sur l'ensemble plaque-structure métallique, c'est-à-dire, qu'il est tout d'abord nécessaire de démonter la table de cuisson qui habituellement est encastrée dans un plan de travail puis de démonter la plaque associée à une partie de la structure métallique du reste de la structure métallique. En aucun cas, il n'est actuellement envisageable de prévoir une désolidarisation complète de la plaque par rapport à la structure métallique sur laquelle elle est collée.

L'invention a pour but de remédier à ces inconvénients et plus particulièrement de proposer une plaque en matériau verrier tel que verre trempé ou vitrocéramique dont le montage sur une structure métallique, ou équivalente présente un coût inférieur aux techniques évoquées précédemment, notamment en ce qui concerne la matière de fixation et pouvant être démonter et éventuellement remonter, simplement et sans risque de détériorer la plaque vitrocéramique.

L'invention a également pour but une telle plaque en matériau verrier dont les moyens de fixation assureront les fonctions d'étanchéité, d'amortisseur mécanique et de résistance à la température et conféreront un bon aspect esthétique.

Ces buts sont atteints selon l'invention par une plaque en matériau verrier tel que verre trempé ou vitrocéramique destinée à être fixée dans un cadre, par exemple métallique, comportant au moins un profilé polymère sur sa périphérie, ledit profilé présentant sur au moins une partie de sa longueur une forme assurant une fixation telle qu'un emboîtement avec le cadre.

Par périphérie, on entend la zone périphérique de la plaque en matériau verrier ; c'est-à-dire que le profilé peut couvrir au moins une partie du chant de la plaque et/ou au moins une partie périphérique d'une surface de ladite plaque.

Selon l'invention, la fixation est obtenue par un profilé de section calibrée et donc présentant une quantité de matière nécessaire et suffisante à sa fonction. De plus, la fixation étant du type emboîtement, elle est simple de mise en oeuvre et peut être réversible. De préférence, l'emboîtement est obtenu par le choix d'un profilé polymère déformable de façon élastique.

Un mode de réalisation de l'invention prévoit que la forme présente sur le profilé est en creux et qu'elle s'associe à un relief de forme complémentaire prévu sur le cadre.

Selon un autre mode de réalisation préféré de l'invention, la forme présente sur le profilé est une saillie et elle s'associe à une lumière ou forme en creux complémentaire prévue sur le cadre. Selon l'un ou l'autre de ces modes de réalisation, la fixation de la plaque en matériau verrier dans le cadre est effectuée simplement par pressage mécanique. En effet, la déformation élastique du profilé et donc celle de la saillie lorsqu'elle existe permet par pressage d'insérer la plaque dans le cadre en déformant le profilé qui reprend sa forme initiale dès que la saillie atteint le logement prévu à cet effet dans le cadre. Avantageusement, les dimensions et la forme du profilé sont prévues de sorte qu'une fois la plaque fixée dans le cadre, ce dernier exerce une pression sur le profilé sur la périphérie de la plaque. Une telle association permet ainsi en outre d'assurer une bonne étanchéité entre la plaque en matériau verrier proprement dite et le cadre.

Pour cela, selon une variante de l'invention, le profilé polymère est par exemple réalisé sur la totalité du chant de la plaque et optionnellement sur une partie de la face inférieure, de façon à ce que le profilé remplisse à la fois les fonctions de fixation et d'étanchéité.

Selon d'autres variantes de l'invention, la plaque comporte au moins deux profilés, l'un couvrant une partie ou la totalité du chant de la plaque et assurant l'étanchéité, l'autre couvrant une autre partie du chant et/ou une partie de la face inférieure de la plaque et assurant la fonction de fixation.

Ces dernières variantes de réalisation dissocient les fonctions fixation et étanchéité, chacune étant assurée par un profilé différent. De telles réalisation peuvent permettre de limiter encore la quantité de matière nécessaire à la réalisation de ces profilés. Elles peuvent encore permettre de réaliser des profilés avec des matériaux différents, avec des formes fondamentalement différentes, par exemple l'un pouvant être continu, l'autre discontinu, ou bien encore de réaliser les profilés avec des techniques différentes.

Selon une réalisation préférée de l'invention, le profilé comporte la forme sur toute la longueur et celle-ci s'associe à une forme complémentaire prévue sur toute la périphérie du cadre. Une telle réalisation assure notamment une fixation très sûre. Les dimensions de la forme sont toutefois avantageusement prévues pour autoriser un démontage de la plaque. Celui-ci peut par exemple être effectué à l'aide de ventouse positionnée dans au moins un coin de la plaque.

Le matériau constituant le profilé doit être un matériau présentant une tenue suffisante en température, c'est-à-dire stable à environ 200°C. Avantageusement, le matériau présente après polymérisation des propriétés élastiques. Il est encore de préférence inerte vis-à-vis des aliments, stable face aux détergents ou autres, pouvant notamment être utilisé dans une cuisine.

Selon une variante avantageuse de l'invention le profilé est une silicone. Il s'agit par exemple d'une des silicones commercialisées par RHONE POULENC sous les références RTV 585, RTV 1525, ou d'une des silicones commercialisées par WACKER sous la référence ELASTOSIL LR 3004/50.

Selon d'autres variantes, le profilé peut être réalisé à partir d'élastomères fluorés tels que celui commercialisé par la Société SAFIC-ALCAN sous la référence VITON ou celui commercialisé par la Société 3 M sous la référence FLUOREL. Si ces matériaux satisfont aux exigences de l'application ils sont économiquement moins intéressants.

L'invention permet alors principalement par rapport aux techniques connues, de limiter la quantité de silicone utilisée, le profilé étant totalement réalisé avant assemblage et donc avec les dimensions nécessaires et suffisantes.

En outre, les techniques de mise en oeuvre de ces matériaux pour réaliser un profilé sont multiples.

Selon une première variante de l'invention, le profilé est réalisé par surmoulage et plus précisément par injection moulage. Notamment dans le cas d'un profilé réalisé en silicone, il existe différentes techniques pour la réalisation dudit profilé, notamment fonction du choix de la silicone. Ces techniques consistent le plus souvent à vulcaniser à chaud la silicone pour la faire passer en un temps court d'un état pâteux à l'état solide, plus ou moins élastique. Une première méthode plus particulièrement adaptée à des silicones présentant une forte viscosité consiste en une injection très haute pression de type EPDM (éthylène-propylène-diène). Cette technique consiste à injecter une silicone dans un moule maintenu à 200°C avec de très hautes pressions. Cette technique nécessite beaucoup de précautions pour éviter la casse des plaques en matériau verrier due aux pressions élevées.

Une autre technique, adaptée à des silicones bi-composant pâteuses dont la viscosité est comprise entre 200 000 et 2 000 000 mPa.s, est une injections haute pression de type thermoplastique dans un moule chauffé à 200°C. Les pressions utilisées sont alors moins dangereuses pour les plaques en matériau verrier.

Une dernière technique plus adaptée à des silicones dont la viscosité est plus proches des liquides est une injection basse pression haute fréquence. Contrairement aux techniques précédentes, le moule est réfrigéré et la matière s'échauffe sous l'influence du champ électrique haute fréquence. Dans le cas des silicones, on ajoute des additifs tels que des additifs FREQUON qui améliorent la sensibilité au champ haute fréquence. Cette dernière technique présente l'avantage d'être très rapide.

Selon une autre variante de l'invention le polymère est réalisé par extrusion in situ. Une telle technique est par exemple décrite dans le brevet EP 0 524 092 pour d'autres applications concernant l'automobile. Cette technique peut notamment être utilisé avec des silicones.

Selon une dernière variante de l'invention le profilé est extrudé au préalable et fixé à la plaque en matériau verrier par clipsage ou collage. Cette dernière variante présente notamment des avantages pour le recylcage des matériaux ; en effet la séparation entre le profilé et la plaque apparaît très simple notamment dans le cas du clipsage.

Les différents procédés ainsi décrits pour réaliser le profilé selon l'invention permettent l'obtention d'un profilé possédant la forme voulue conduisant aux fonctions de fixation et d'étanchéité sans aucun surplus de matière.

Il est ainsi possible de préparer des plaques en matériau verrier telles que des plaques vitrocéramiques associées à un profilé prêtent à être fixées dans un cadre.

L'étape ultérieure de montage peut ainsi être simplifiée par rapport aux techniques antérieures et peut être très rapide, aucune étape d'attente n'étant nécessaire.

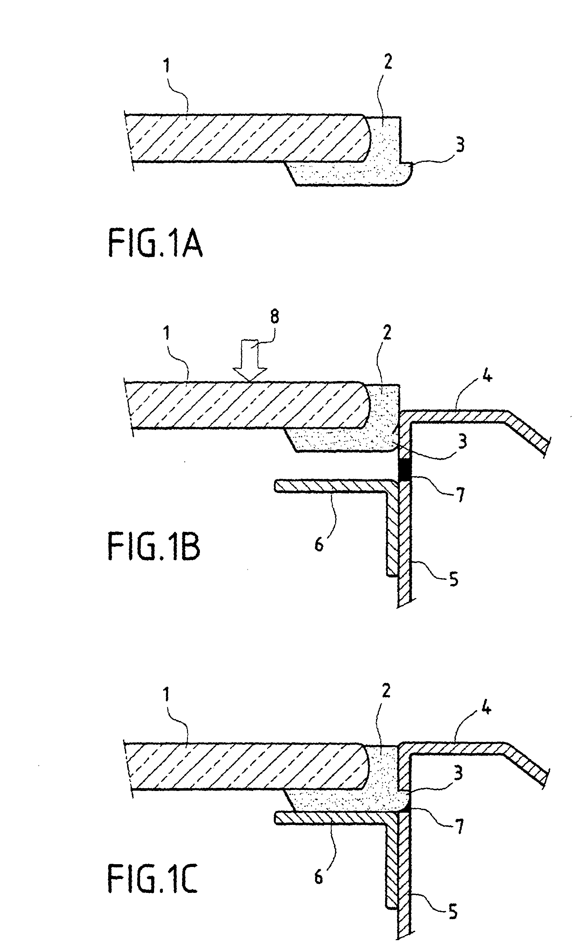

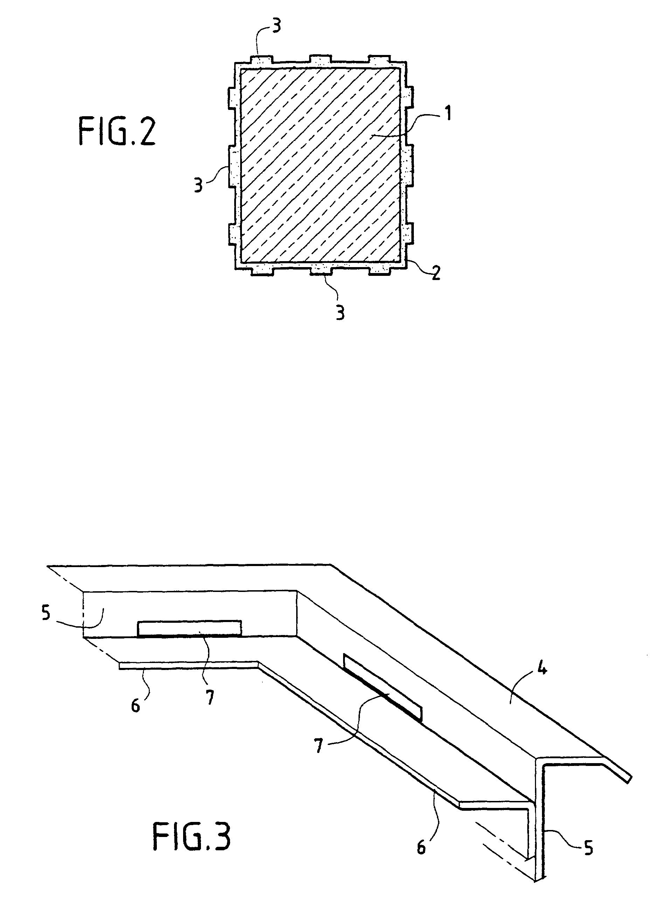

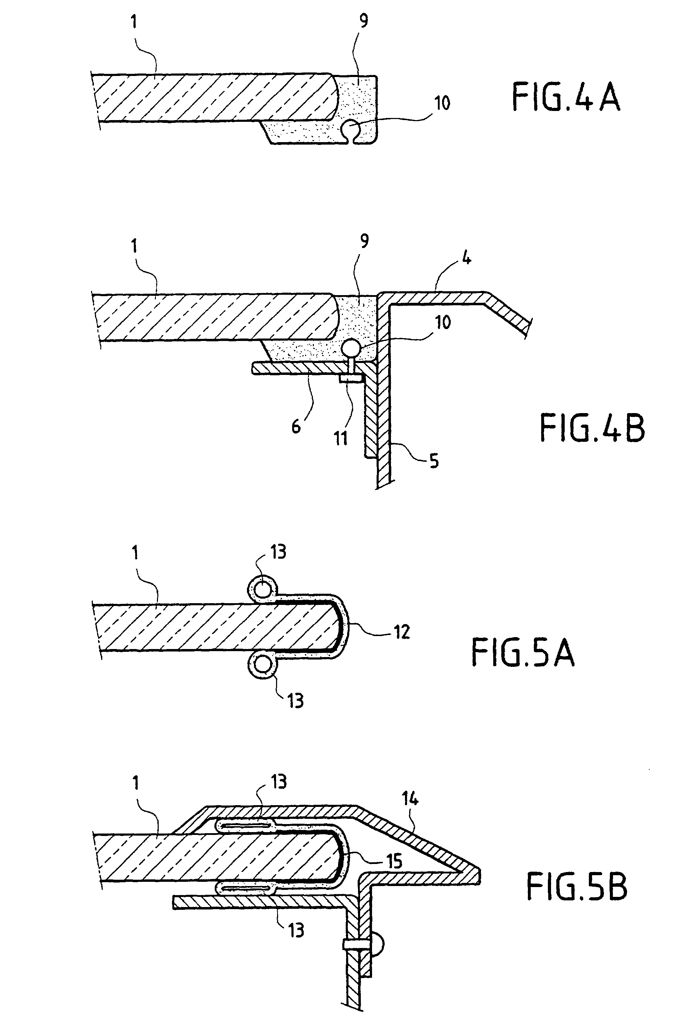

D'autres détails et caractéristiques de l'invention ressortiront de la description d'exemples de réalisation en référence aux figures 1, 2 et 3 qui représentent :
□ **figures 1a, b, c :** un exemple de plaque vitrocéramique comportant un profilé selon l'invention et sa fixation dans un cadre,
□ **figure 2** : une vue de dessus d'une plaque selon la figure 1,
□ **figure 3** : une vue en perspective d'un cadre s'associant avec les plaques selon les figures 1 et 2,
□ **figures 4a, b** : un autre exemple de réalisation de l'invention,
□ **figures 5a, b** : un autre exemple de réalisation de l'invention.

Les figures ne sont pas réalisées à l'échelle pour en simplifier la compréhension.

Sur la figure 1 a été représentée une vue partielle de coté d'une plaque vitrocéramique 1 à la périphérie de laquelle un joint polymère 2 a été surmoulé. Un tel joint 2 est par exemple réalisé par encapsulation HF d'une silicone telle que celle commercialisée sous la référence RTV 585 par la Société RHONE POULENC.

Le joint 2, comme représenté plus clairement sur la figure 2 est formé sur toute la périphérie, notamment pour garantir une bonne étanchéité, fonction sur laquelle il sera revenu ultérieurement. A sa base, le profilé 2 comporte une excroissance ou ergot 3 qui servira pour la fixation. L'ergot 3 peut être formé soit de façon continue sur toute la périphérie du vitrage, soit de façon discontinue, comme représenté sur la figure 2.

Les figures 1b et 1c montrent plus précisément le montage ou fixation de l'ensemble plaque vitrocéramique-profilé dans un cadre 4. Le cadre 4, qui le plus souvent est métallique, est constitué de plusieurs parties : il comporte au moins une partie formant des montants sensiblement verticaux 5, ceux-ci constituant l'ouverture du cadre 4 dans laquelle l'ensemble plaque vitrocéramique-profilé vient s'insérer. De préférence, le contact, après insertion dudit ensemble, entre le profilé 2 et les montants 5 doit former une étanchéité parfaite pour prévenir toute entrée d'eau dans la zone où sont placés les éléments chauffants. L'étanchéité obtenue permet également d'éviter l'incrustation de poussières ou particules alimentaires. Le cadre 4 comporte ensuite une seconde partie qui s'étend également sur toute la périphérie du cadre, il s'agit d'éléments porteurs 6 positionnés horizontalement qui supportent l'ensemble plaque-profilé, le contact avec les éléments 6 se faisant avantageusement par l'intermédiaire du profilé.

Selon l'invention, il est en outre prévu dans les éléments verticaux 5, une lumière ou ouverture 7 dans laquelle l'ergot 3 peut venir s'insérer. Dans le cas d'un ergot 3 continu sur toute la périphérie de la plaque, il ne s'agira bien entendu plus d'une lumière mais d'une cavité dont le volume en creux est au moins complémentaire de celui de l'ergot 3.

La figure 3 illustre partiellement un tel cadre 4 par une vue en perspective. Le cadre 4 ici présenté est destiné à recevoir un profilé comportant des ergots 3 répartis sur la périphérie de la plaque vitrocéramique de façon discontinue. En effet, il apparaît que le cadre 4 ainsi représenté comporte plusieurs lumières ou ouvertures 7 réparties sur les éléments verticaux 5. De telles ouvertures sont par ailleurs très simples à réaliser, notamment par emboutissage.

La figure 1b montre que le choix du matériau constituant le profilé, dans le cas présent une silicone telle que celle décrite précédemment, est fait pour que ledit profilé puisse se déformer de façon élastique. En effet, le « cadre » que forme le profilé 2 en périphérie de la plaque vitrocéramique présente des dimensions outre la présence de l'ergot 3, supérieures à celles de l'orifice du cadre 4 dans lequel l'ensemble plaque vitrocéramique-profilé doit s'insérer. Ainsi, comme illustré sur la figure 1b, une force de pression, symbolisée par la flèche 8, doit être exercée sur l'ensemble plaque vitrocéramique-profilé pour l'introduction dans le cadre 4 de façon à déformer le profilé 2 et plus particulièrement l'ergot 3. Par ailleurs, cette déformation élastique du profilé 2 permet après assemblage avec le cadre 4, de faire apparaître une interaction entre le profilé 2 et le montant vertical 5 du cadre ; celle-ci crée d'une part des forces de frottement qui contribuent au maintien de la plaque vitrocéramique 1 dans le cadre 4 et d'autre part assure une bonne étanchéité de la liaison.

La figure 1c illustre l'ensemble plaque vitrocéramique-profilé mis en place dans le cadre 4. Sur cette figure 1c, l'ensemble plaque vitrocéramique-profilé a été inséré dans le cadre 4, de façon que d'une part le profilé soit en appui sur les éléments supports 6 et au contact des éléments verticaux 5 et que d'autre part l'ergot 3, pénètre dans l'ouverture 7. Pour arriver à cette position, le profilé a été déformé, comme le montre la figure 1b, et a quasiment repris sa forme initiale ; seule la partie du profilé supérieure à la zone où se trouve l'ergot 3 reste comprimée, comme expliqué précédemment, notamment pour obtenir une parfaite étanchéité. Par ailleurs, le positionnement de l'ergot 3 dans l'ouverture 7 prévue à cet effet garantit le maintien de la plaque vitrocéramique dans le cadre 4. Ce maintien est encore renforcé par les forces de frottement qui s'exercent entre les montants 5 et le profilé 2.

La fixation d'une plaque vitrocéramique 1 dans un cadre 4 est donc parfaitement assurée selon l'invention. En outre, il est toutefois possible de redémonter ladite plaque sans trop de difficultés. En effet, les essais ont montré qu'avec une ou plusieurs ventouses, il était possible d'exercer une traction suffisante pour déformer le profilé et notamment faire sortir le ou les ergots 3 des ouvertures 7.

Il est encore possible d'apporter quelques améliorations au profilé 2 associé à la plaque vitrocéramique 1. Après l'insertion de l'ensemble plaque-profilé dans le cadre, il a été expliqué que le profilé subit une compression de la part des montants verticaux 5 , il est alors possible de voir apparaître une déformation en partie supérieure du profilé 2 et notamment un gonflement. Dans le montage de la figure 1c, cette partie du profilé qui entoure la plaque vitrocéramique 1 reste visible. Il est donc souhaitable d'avoir une surface apparente du profilé qui reste plane et sans défaut. L'invention propose ainsi de former le profilé avec une partie supérieure qui compense par avance le gonflement dû à la compression exercée par les montants 5, de sorte que la surface supérieure du profilé 2 soit plane après montage.

Une autre variante de l'invention non représentée sur les figures consiste à former un ergot 3 sur le profilé 2 dont la forme et les dimensions peuvent lui procurer des fonctions autres que celles de fixation. Par exemple, un tel ergot 3 peut permettre de positionner la plaque vitrocéramique par centrage pendant sa mise en place ou bien encore alors qu'elle est en place dans le cadre.

Les figures 4a et 4b illustrent une autre variante de l'invention. Sur la figure 4a, une plaque vitrocéramique est associée à un profilé périphérique 9 réalisé en silicone selon les mêmes techniques que celui des figures 1 et 2. Par contre, contrairement aux figures précédentes, la forme qui assure la fixation au cadre n'est pas une saillie, mais une forme en creux 10 placée sur la face inférieure du profilé 9. Le positionnement de cette forme ne doit bien entendu pas être interprété de façon limitative.

La figure 4b montre que sur le cadre 4 et plus particulièrement sur l'élément de support 6 est prévue une tête de fixation 11, dont la forme est complémentaire de celle de la forme 10. Une telle représentation de l'invention permet encore une fixation simple et sûre d'une plaque vitrocéramique 1 dans un cadre 4 - tout en autorisant un démontage possible.

Les figures 5a et 5b illustrent un tout autre type de profilé 12 ; ce profilé 12 est un profilé réalisé au préalable par exemple par extrusion. Dans le cas présent, il enveloppe une âme 15 telle qu'un clips métallique ou tout autre matériau rigide qui permet de le fixer à la plaque vitrocéramique par pincement. Dans le cas représenté, le profilé n'est pas visible après montage mais sera recouvert par une partie du cadre 14. Le profilé comporte des excroissances 13 visibles sur la figure 5a qui lors du montage comme le montre la figure 5b sont déformés d'une part pour fixer la plaque vitrocéramique 1 dans le cadre 14 et d'autre part pour garantir une bonne étanchéité. Il apparaît que le montage et le démontage ne sont pas aussi simples que dans les cas précédents, car le cadre 14 vient couvrir le profilé par souci esthétique. Par contre, comme évoqué précédemment, ce type de profilé pré-extrudé présente un grand avantage en ce qui concerne le recyclage des plaques vitrocéramiques puisqu'il peut être dissocié facilement de ladite plaque.

Les différents exemples ci-dessus présentés, qui ne doivent bien entendu pas être interprétés de façon limitative, montrent que l'invention autorise un montage simple et efficace d'une plaque vitrocéramique dans un cadre à moindre coût, notamment en ce qui concerne la matière polymère.

En effet, l'association d'un profilé à la plaque préalablement au montage de celle-ci dans un cadre, ledit profilé étant réalisé selon l'une des méthodes décrites précédemment permet de dimensionner celui-ci de sorte qu'il assure ses fonctions de fixation et éventuellement d'étanchéité, sans surcoût, dû à un excès de matière. En outre, l'invention autorise un montage simplifié, notamment sans nécessité de stockage intermédiaire pour la polymérisation du profilé, et simple de mise en oeuvre, mais encore un démontage possible par le choix d'une forme adaptée.

## Revendications

1. Plaque en matériau verrier, tel que verre trempé ou vitrocéramique, destinée à être fixée dans un cadre, comportant au moins un profilé polymère sur sa périphérie, ***caractérisée en ce que*** ledit profilé présente sur au moins une partie de sa longueur une forme assurant une fixation telle qu'un emboîtement direct avec le cadre, cette forme étant une partie intégrante du profilé.

2. Plaque selon la revendication 1, ***caractérisée en ce que*** le profilé est déformable de façon élastique.

3. Plaque selon la revendication 1 ou 2, ***caractérisée en ce que*** la forme est une saillie.

4. Plaque selon l'une des revendications 1 ou 2, ***caractérisée en ce que*** la forme est en creux.

5. Plaque selon l'une des revendications 1 à 4, ***caractérisée en ce que*** la forme est présente sur toute la longueur du profilé.

6. Plaque selon l'une des revendications 1 à 4, **caractérisée en ce que** la forme présente sur le profilé est discontinue.

7. Plaque selon l'une des revendications 1 à 6, ***caractérisée en ce que*** le profilé est une silicone.

8. Plaque selon l'une des revendications précédentes, ***caractérisée en ce que*** le profilé est réalisé selon une technique de surmoulage.

9. Plaque selon l'une des revendications 1 à 7, ***caractérisée en ce que*** le profilé est réalisé par extrusion in-situ.

10. Plaque selon l'une des revendications 1 à 7, ***caractérisée en ce que*** le profilé est extrudé et fixé à ladite plaque par clipsage ou collage.

## Claims

1. Plate made from glass material, such as toughened glass or glass-ceramic material, intended to be fixed in a frame, comprising at least one polymer profiled section on its periphery, **characterised in that** the said profiled section has, over at least part of its length, a shape providing fixing such as direct fitting together with the frame, this shape being an integral part of the profiled section.

2. Plate according to Claim 1, **characterised in that** the profiled section is elastically deformable.

3. Plate according to Claim 1 or 2, **characterised in that** the shape is a projection.

4. Plate according to Claim 1 or 2, **characterised in that** the shape is in a hollow.

5. Plate according to one of Claims 1 to 4, **characterised in that** the shape is present over the entire length of the profiled section.

6. Plate according to one of Claims 1 to 4, **characterised in that** the shape present on the profiled section is discontinuous.

7. Plate according to one of Claims 1 to 6, **characterised in that** the profiled section is a silicone.

8. Plate according to one of the preceding claims, **characterised in that** the profiled section is produced according to an overmoulding technique.

9. Plate according to one of Claims 1 to 7, **characterised in that** the profiled section is produced by in-situ extrusion.

10. Plate according to one of Claims 1 to 7, **characterised in that** the profiled section is extruded and fixed to the said plate by snapping on or adhesive bonding.

## Patentansprüche

1. Platte aus einem Glasmaterial wie vorgespanntes Glas oder Glaskeramik, die vorgesehen ist, in einem Rahmen befestigt zu werden und an ihrem Umfang mindestens ein Polymerprofil umfasst, **dadurch gekennzeichnet, dass** das Profil auf wenigstens einem Teil seiner Länge eine Form aufweist, die eine Befestigung wie ein direktes Zusammenstecken mit dem Rahmen sicherstellt und integraler Bestandteil des Profils ist.

2. Platte nach Anspruch 1, **dadurch gekennzeichnet, dass** das Profil elastisch verformbar ist.

3. Platte nach Anspruch 1 oder 2, **dadurch gekennzeichnet, dass** die Form ein Vorsprung ist.

4. Platte nach Anspruch 1 oder 2, **dadurch gekennzeichnet, dass** die Form hohl ist.

5. Platte nach einem der Ansprüche 1 bis 4, **dadurch gekennzeichnet, dass** die Form auf der gesamten Länge des Profils vorhanden ist.

6. Platte nach einem der Ansprüche 1 bis 4, **dadurch gekennzeichnet, dass** die auf dem Profil vorhandene Form unterbrochen ist.

7. Platte nach einem der Ansprüche 1 bis 6, **dadurch gekennzeichnet, dass** das Profil aus Silicon besteht.

8. Platte nach einem der vorhergehenden Ansprüche, **dadurch gekennzeichnet, dass** das Profil gemäß einem Aufformungsverfahren hergestellt worden ist.

9. Platte nach einem der Ansprüche 1 bis 7, **dadurch gekennzeichnet, dass** das Profil *in situ* durch Extrudieren hergestellt worden ist.

10. Platte nach einem der Ansprüche 1 bis 7, **dadurch gekennzeichnet, dass** das Profil extrudiert und an dieser Platte durch eine Klemm- oder Klebeverbindung befestigt worden ist.
